# EUROPÄISCHE PATENTSCHRIFT

(11) **EP 1 738 084 B1**
(45) Veröffentlichungstag und Bekanntmachung des Hinweises auf die Patenterteilung: **17.03.2010**
(21) Anmeldenummer: 05734045.7
(22) Anmeldetag: 14.04.2005
(51) Int. Cl.: F16B 21/12

(54) **TRAGBOLZEN MIT SICHERUNGSELEMENT**
LIFTING BOLT COMPRISING SAFETY ELEMENT
CHEVILLE DE SUPPORT COMPORTANT UN ELEMENT DE SECURITE

(30) Priorität: 21.04.2004 DE 102004020039
(43) Veröffentlichungstag der Anmeldung: 03.01.2007
(73) Patentinhaber: RUD Ketten Rieger & Dietz GmbH u. Co. KG, 73432 Aalen (DE)
(72) Erfinder: REINHARD, Smetz, 86732 Öttingen (DE); BETZLER, Michael, 73430 Aalen (DE)
(74) Vertreter: Grünecker, Kinkeldey, Stockmair & Schwanhäusser Anwaltssozietät
(86) Internationale Anmeldenummer: PCT/EP2005/003904
(87) Internationale Veröffentlichungsnummer: WO 2005/103508

(56) Entgegenhaltungen:
- US-A- 1 719 891
- US-A- 3 145 441
- US-A- 4 056 248
- US-A- 4 285 377

## Beschreibung

### Technisches Gebiet

Die Erfindung betrifft einen zur Überbrückung eines Zwischenraumes zwischen zwei Sehenkein eines Lastaufnahmemittels dienenden Tragbolzen, der außer einem festen Endanschlag ein unverlierbares Sicherungselement aufweist, das eine Sicherungsposition und eine Freigabeposition einnehmen kann, wobei der Tragbolzen mit einer Querbohrung und einer die Querbohrung schneidenden Längsbohrung versehen ist und in der Querbohrung ein Sperrbolzen angeordnet ist, während in der Längsbohrung ein Betätigungsbolzen für den Sperrbolzen geführt ist.

### Stand der Technik

Tragbolzen der vorstehend beschriebenen Art kommen insbesondere in Verbindung mit Anschlagpunkten für Ketten, Seile oder Gurte zum Einsatz, wie man ihnen z.B. bei großen Umformwerkzeugen als integrierte Bestandteile dieser Werkzeuge begegnet.

Aus dem Entwurf VDI 3366 der VDI-Richtlinien ist ein Tragbolzen der in Betracht gezogenen Gattung bekannt, der mit einer sogenannten Fallringsicherung versehen ist. Eine derartige Sicherung bietet gegenüber Sicherungen in Form von in Bohrungen an den Enden des Tragbolzens einführbaren Splinten oder in Form von in Querbohrungen der Wangen einschlagbaren Sicherungsstiften den Vorteil, dass das Sicherungselement unverlierbar ist, auch bei ihnen vermag der Bedienungskomfort indes nicht zu befriedigen, da der Fallring zumindest bei der Demontage des Tragbolzens vor dem Passieren der Bohrungen in den Schenkeln des Lastaufnahmemittels von Hand aus seiner Sicherungsposition entfernt werden muss, was in der Praxis häufig zu Fingerverletzungen der Bedienungspersonen führt. Da die bekannte Sicherung auf dem Schwerkraftprinzip basiert, ist sie zudem anfällig gegen Verschmutzungen.

Ein mit einer im Vergleich zum Tragbolzen gemäß den obigen VDI-Richtlinien verbesserten Handhabbarkeit ausgestatteter Tragbolzen ist in der US 4,285,377 beschrieben. Allerdings ist der Sperrbolzen durch den Betätigungsbolzen zwangsgeführt, so dass der Tragbolzen ausschließlich von der Seite, an welcher der Betätigungsbolzen zugänglich ist, entsperrt werden kann. Der Bedienungskomfort ist auch bei diesem Tragbolzen eingeschränkt.

### Darstellung der Erfindung

Der Erfindung liegt die Aufgabe zugrunde, einen Tragbolzen zu schaffen, der bequem handhabbar ist und einen hohen Sicherheitsgrad bietet. Gelöst wird diese Aufgabe erfindungsgemäß dadurch, dass in der Querbohrung eine den Sperrbolzen in eine Sperrstellung drückende Feder angeordnet ist, und dass der Sperrbolzen eine Ausnehmung mit einer Schrägfläche aufweist, über die durch einen in der Ausnehmung geführten Abschnitt des Betätigungsbolzens eine der Federkraft entgegengerichtete, den Sperrbolzen aus seiner Sicherungsposition entfernende Bewegung in den Sperrbolzen einleitbar ist.

Der erfindungsgemäße Tragbolzen bietet den Vorteil, dass er schnell und unproblematisch sowohl montier- als auch demontierbar ist. Beeinträchtigungen der Sicherung durch Verschmutzungen sind nicht zu befürchten, da sämtliche funktionswichtigen Teile im innern des Tragbolzens angeordnet sind.

Weitere Merkmale und Einzelheiten der Erfindung ergeben sich aus den Unteransprüchen und der nachstehenden Beschreibung einer in den beigefügten Zeichnungen dargestellten, besonders vorteilhaften Ausführungsform der Erfindung.

### Kurze Beschreibung der Zeichnungen

Es zeigen:

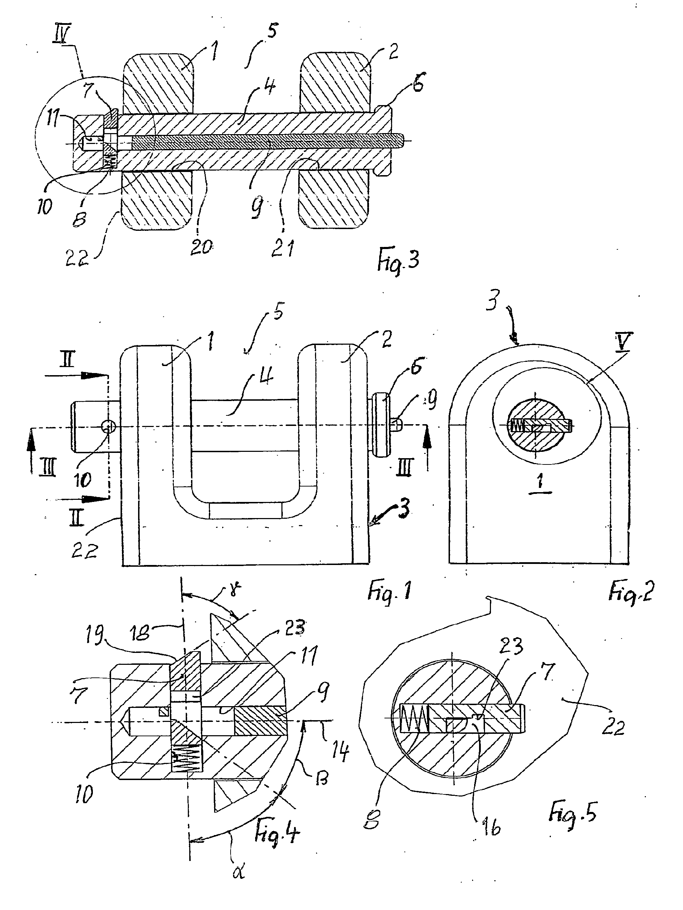

- Fig. 1: die Vorderansicht einer sogenannten Tragwange, deren von Schenkeln begrenzter Zwischenraum durch einen Tragbolzen überbrückt werden,
- Fig. 2: einen Schnitt längs der Linie II-II in Fig. 1,
- Fig. 3: einen Schnitt längs der Linie II-III in Fig. 1,
- Fig. 4: in vergrößertem Maßstab eine Einzelheit IV in Fig. 3,
- Fig. 5: in vergrößertem Maßstab eine Einzelheit V in Fig. 2,
- Fig. 6: eine erste perspektivische Darstellung der Teile der Sicherung des Tragbolzens ,
- Fig. 7: eine zweite perspektivische Darstellung der Teile der Sicherung des Tragbolzens,
- Fig. 8: im gegenüber der Fig. 3 vergrößerten Maßstab einen Schnitt durch den Tragbolzens gemäß den Figuren 1 bis 7 in der Sicherungsstellung,
- Fig. 9: im gegenüber der Fig. 3 vergrößerten Maßstab einen Schnitt durch den Tragbolzen gemäß den Figuren 1 bis 7 in der entsicherten Stellung und
- Fig. 10: im gegenüber der Fig. 3 vergrößerten Maßstab einen Schnitt durch den Tragbolzen gemäß den Figuren 1 bis 7 während der Montage bzw. De- montage der die Sicherung bildenden Teile.

### Wege zur Ausführung der Erfindung

In den Figuren sind 1 und 2 die Schenkel eines von einer sogenannten Tragwange 3 gebildeten Lastaufnahmemittels. Die Schenkel 1 und 2 begrenzten einen durch einen Tragbolzen 4 überbrückten Zwischenraum 5, der durch ein nicht dargestelltes Endglied eines Anschlagkettenstranges oder durch die Kausche eines Hubseiles steckbar ist.

Um zu gewährleisten, dass der Tragbolzen 4 sich beim Heben einer Last, an die die Tragwange 3 angeschraubt oder angeschweißt ist, nicht ungewollt löst, ist er mit einer Lagesicherung versehen. Sie besteht einerseits aus einem von einem Ringflansch gebildeten Endanschlag 6 und andererseits aus einem Sperrbolzen 7, der durch eine Feder 8 in eine Sperrposition gedrückt wird, aus der er sich mit Hilfe eines Betätigungsbolzens 9 entfernen lässt. Der Sperrbolzen 7 und die Feder 8 sind in einer Querbohrung 10 untergebracht, die eine Längsbohrung 11 schneidet, in der der Betätigungsbolzen 9 geführt ist.

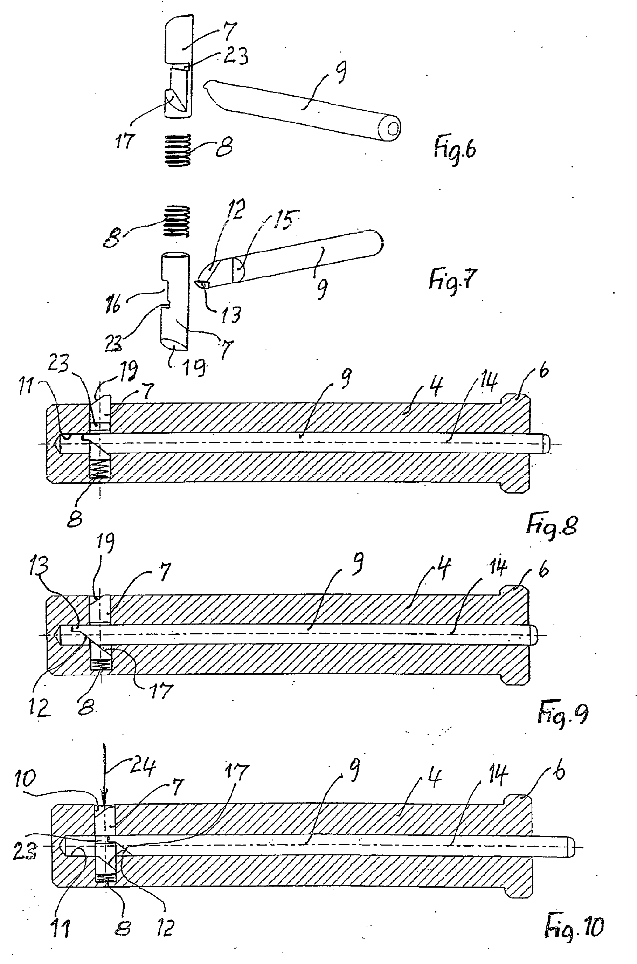

Wie insbesondere den Figuren 6 und 7 entnommen werden kann, besitzt der Betätigungsbolzen 9 an seinem freien Ende eine Schrägfläche 12, an die sich ein Rastnocken 13 anschließt, der im montierten Zustand des Betätigungsbolzens 9 den Sperrbolzen 7 hintergreift, um auf diese Weise den Zusammenhalt von Betätigungsbolzen 9 und Sperrbolzen 7 zu sichern. Eine senkrecht zur Längsachse 14 des Betätigungsbolzens 9 verlaufende Anschlagfläche 15 begrenzt den Hub des Betätigungsbolzen 9.

Das den Rastnocken 13 aufweisende Ende des Betätigungsbolzens 9 greift in eine Ausnehmung 16 des Sperrbolzens 7, die eine zum Zusammenspiel mit der Schrägfläche 12 des Betätigungsbolzens 9 bestimmte Schrägfläche 17 aufweist.

Die Schrägfläche 17 des Sperrbolzens 7 nimmt zur Längsachse 18 des Sperrbolzens 7 einen Winkel α von ca. 50° ein, während der Winkel β zwischen der Schrägfläche 12 des Betätigungsbolzens 9 und dessen Längsachse 14 ca. 40° beträgt. An seinem in der Sperrstellung über den Umfang des Tragbolzens 4 vorstehenden Ende ist der Sperrbolzen 7 mit einer weiteren Schrägfläche 19 ausgestattet, die gegenüber der Längsachse 18 des Sperrbolzens 7 einen Winkel γ von etwa 60° einnimmt.

Dank der Schrägfläche 19 und der Art der Zuordnung des Betätigungsboizens 9 zum Sperrbolzen 7 wird letzterer beim Einführen des Tragbolzens 4 in die fluchtenden Bohrungen 20 und 21 der Schenkel 1 und 2 der Tragwange 3 automatisch in die in Figur 9 dargestellte Position überführt. Sobald der Sperrbolzen 7 die Vorderwand 22 des Schenkels 1 passiert hat, wird das Ende des Sperrbolzens 7 durch die Feder 8 in die in Fig. 8 dargestellte Position zurückbewegt, so dass der Tragbolzens 4 sicher in der Tragwange 3 gehalten wird.

Um die Teile 7, 8, und 9 der Sicherung einfach montieren und demontieren zu können, ist der Sperrbolzen 7 mit einer Einführnut 23 versehen, die der Rastnocken 13 passieren kann, wenn der Sperrbolzen 7 beispielsweise unter Zuhilfenahme eines Bleistiftes oder Domes in Richtung des Pfeiles 24 gegen die Wirkung der Feder 8 in die in Figur 10 dargestellte Position gedrückt wird.

## Patentansprüche

1. Zur Überbrückung eines Zwischenraumes zwischen zwei Schenkeln eines Lastaufnahmemittels dienender Tragbolzen, der ausser einem festen Endanschlag ein unverlierbares Sicherungselement aufweist, das eine Sicherungsposition und eine Freigabeposition einnehmen kann, wobei der Tragbolzen mit einer Querbohrung (10) und einer die Querbohrung (10) schneidenden Längsbohrung (11) versehen ist und in der Querbohrung (10) ein Sperrbolzen (7) angeordnet ist, während in der Längsbohrung (11) ein Betätigungsbolzen (9) für den Sperrbolzen (7) geführt ist, **dadurch gekennzeichnet, dass** in der Querbohrung (10) eine den Sperrbolzen (7) in eine Sperrstellung drückende Feder (8) angeordnet ist, und dass der Sperrbolzen (7) eine Ausnehmung (16) mit einer Schrägfläche (17) aufweist, über die durch einen in der Ausnehmung (17) geführten Abschnitt des Betätigungsbolzens (9) eine der Federkraft entgegengerichtete, den Sperrbolzen (7) aus seiner Sicherungsposition entfernende Bewegung in den Sperrbolzen (7) einleitbar ist.

2. Tragbolzen nach Anspruch 1, **dadurch gekennzeichnet, dass** die Ausnehmung (16) des Sperrbolzens (7) an ihrem der Schrägfläche (17) gegenüberliegenden Ende mit einer Einführnut (23) für einen den Sperrbolzen (7) in seinen Betriebsstellungen hintergreifenden, am Ende des Betätigungsbolzens (9) angeordneten Rastnocken (13) versehen ist.

3. Tragbolzen nach Anspruch 1 oder 2, **dadurch gekennzeichnet, dass** der Sperrbolzen (7) zur Überführung des Rastnockens (13) des Betätigungsbolzens (9) in den Bereich der Einführnut (23) gegen die Wirkung der am Ende der Bohrung (10) für den Sperrbolzen (7) angeordneten Feder (8) in diese Bohrung (10) drückbar ist.

4. Tragbolzen nach einem der Ansprüche 1 bis 3, **dadurch gekennzeichnet, dass** der Betätigungsbolzen (9) mit einer Anschlagfläche (15) versehen ist, die den Hub des Betätigungsbolzens (9) begrenzt.

5. Tragbolzen nach einem der Ansprüche 1 bis 4, **dadurch gekennzeichnet, dass** der in der Ausnehmung (16) des Sperrbolzens (7) geführte Abschnitt des Betätigungsbolzens (9) mit einer Schrägfläche (12) versehen ist, deren Schräge an die Schräge der Schrägfläche (17) des Sperrbolzens (7) angepasst ist.

6. Tragbolzen nach Anspruch 5, **dadurch gekennzeichnet, dass** die Schrägflächen (17, 12) des Sperrbolzens (7) und des Betätigungsbolzens (9) im Wesentlichen halbkreisförmig sind.

7. Tragbolzen nach einem der Ansprüche 1 bis 6, **dadurch gekennzeichnet, dass** die Schrägfläche (17) des Sperrbolzens (7) zu seiner Längsachse (18) einen Winkel (α) von 50° einnimmt.

8. Tragbolzen nach einem der Ansprüche 1 bis 7, **dadurch gekennzeichnet, dass** die Schrägfläche (12) des Betätigungsbolzens (9) zu seiner Längsachse (14) einen Winkel (β) von 40° einnimmt.

9. Tragbolzen nach einem der Ansprüche 1 bis 8, **dadurch gekennzeichnet, dass** die Längsachse (14) der Bohrung (11) für den Betätigungsbolzen (9) im Wesentlichen senkrecht zur Längsachse (18) der Bohrung (10) für den Sperrbolzen (7) verläuft.

10. Tragbolzen nach einem der Ansprüche 1 bis 9, **dadurch gekennzeichnet, dass** das freie Ende des Sperrbolzens (7) mit einer Schrägfläche (19) versehen ist, über die beim Einführen des Tragbolzens (4) in Bohrungen (20, 21) der Schenkel (1, 2) des Lastaufnahmemittels (3) eine den Sperrbolzen (7) aus seiner Sicherungsstellung drückende Kraft in den Sperrbolzen (7) einleitbar ist.

## Claims

1. Support bolt for bridging an intermediate space between two legs of a load-carrying device, which support bolt comprises, in addition to a fixed end stop, a captive locking member which can assume a locking position and a release position, the support bolt being provided with a transverse hole (10) and a longitudinal hole (11) which intersects the transverse hole (10), and a blocking bolt (7) being arranged in the transverse hole (10) whilst an actuating bolt (9) for the blocking bolt (7) is guided in the longitudinal hole (11), **characterised in that** a spring (8) which pushes the blocking bolt (7) into a blocking position is arranged in the transverse hole (10) and **in that** the blocking bolt (7) comprises a recess (16) with a oblique face (17), via which a motion which is opposed to the spring tension and which removes the blocking bolt (7) from the locking position thereof can be transmitted to the blocking bolt (7) by a portion of the actuating bolt (9) which is guided in the recess (17).

2. Support bolt according to claim 1, **characterised in that** the recess (16) in the blocking bolt (7) is provided, at the end thereof opposite the oblique face (17), with an insertion groove (23) for a latch cam (13) which engages behind the blocking bolt (7) in the operating positions thereof and which is arranged at the end of the actuating bolt (9).

3. Support bolt according to either claim 1 or claim 2, **characterised in that** the blocking bolt (7), for transferring the latch cam (13) of the actuating bolt (9) into the region of the insertion groove (23) counter to the action of the spring (8) arranged at the end of the hole (10) for the blocking bolt (7), can be pushed into this hole (10).

4. Support bolt according to any one of claims 1 to 3, **characterised in that** the actuating bolt (9) is provided with a stop face (15), which delimits the travel of the actuating bolt (9).

5. Support bolt according to any one of claims 1 to 4, **characterised in that** the portion of the actuating bolt (9) which is guided in the recess (16) in the blocking bolt (7) is provided with an oblique face (12), the slope of which is matched to the slope of the oblique face (17) of the blocking bolt (7).

6. Support bolt according to claim 5, **characterised in that** the oblique faces (17, 12) of the blocking bolt (7) and of the actuating bolt (9) are substantially semicircular.

7. Support bolt according to any one of claims 1 to 6, **characterised in that** the oblique face (17) of the blocking bolt (7) forms an angle (α) of 50° to the longitudinal axis (18) thereof.

8. Support bolt according to any one of claims 1 to 7, **characterised in that** the oblique face (12) of the actuating bolt (9) forms an angle (β) of 40° to the longitudinal axis (14) thereof.

9. Support bolt according to any one of claims 1 to 8, **characterised in that** the longitudinal axis (14) of the hole (11) for the actuating bolt (9) extends substantially perpendicular to the longitudinal axis (18) of the hole (10) for the blocking bolt (7).

10. Support bolt according to any one of claims 1 to 9, **characterised in that** the free end of the blocking bolt (7) is provided with a oblique face (19), via which a force which pushes the blocking bolt (7) out of its locking position can be transmitted to the blocking bolt (7) when the support bolt (4) is introduced into holes (20, 21) in the legs (1, 2) of the load-carrying device (3).

## Revendications

1. Boulon portant, destiné à couvrir un intervalle entre deux branches d'un organe de réception de charge, lequel comporte, outre une butée finale fixe, un élément de sécurité imperdable qui peut être amené dans une position de blocage et une position de déblocage, le boulon portant étant muni d'une forure transversale (10) et d'une forure longitudinale (11) coupant la forure transversale (10), et un boulon de blocage (7) est disposé dans la forure transversale (10), tandis qu'un boulon d'actionnement (9) pour le boulon de blocage (7) est guidé dans la forure longitudinale (11), **caractérisé en ce qu'**un ressort (8) poussant le boulon de blocage (7) dans une position de blocage est disposé dans la forure transversale (10), et **en ce que** le boulon de blocage (7) comporte un évidement (16) avec une surface en biseau (17), par l'intermédiaire de laquelle un mouvement en sens opposé à la force du ressort et écartant le boulon de blocage (7) hors de sa position de blocage, peut être introduit dans le boulon de blocage (7) par une partie du boulon d'actionnement (9), guidée dans l'évidement (17).

2. Boulon portant selon la revendication 1, **caractérisé en ce que** l'évidement (16) du boulon de blocage (7), au niveau de son extrémité opposée à la surface en biseau (17), est muni d'une rainure de réception (23) pour un ergot de blocage (13), réalisé à l'extrémité du boulon d'actionnement (9) et s'engageant derrière le boulon de blocage (7) dans ses positions de service.

3. Boulon portant selon la revendication 1 ou 2, **caractérisé en ce que** le boulon de blocage (7), pour transférer l'ergot de blocage (13) du boulon d'actionnement (9) dans la zone de la rainure de réception (23) peut être poussé dans la forure (10) dans le sens opposé à l'action du ressort (8) disposé à l'extrémité de la forure (10) pour le boulon de blocage (7).

4. Boulon portant selon l'une quelconque des revendications 1 à 3, **caractérisé en ce que** le boulon d'actionnement (9) est muni d'une surface de butée (15), qui limite la course du boulon d'actionnement (9).

5. Boulon portant selon l'une quelconque des revendications 1 à 4, **caractérisé en ce que** la partie du boulon d'actionnement (9), guidée dans l'évidement (16) du boulon de blocage (7), est munie d'une surface en biseau (12), dont la pente est ajustée à la pente de la surface en biseau (17) du boulon de blocage (7).

6. Boulon portant selon la revendication 5, **caractérisé en ce que** les surfaces en biseau (17, 12) du boulon de blocage (7) et du boulon d'actionnement (9) sont sensiblement semi-circulaires.

7. Boulon portant selon l'une quelconque des revendications 1 à 6, **caractérisé en ce que** la surface en biseau (17) du boulon de blocage (7) forme un angle (α) de 50° avec son axe longitudinal (18).

8. Boulon portant selon l'une quelconque des revendications 1 à 7, **caractérisé en ce que** la surface en biseau (12) du boulon d'actionnement (9) forme un angle (β) de 40° avec son axe longitudinal (14).

9. Boulon portant selon l'une quelconque des revendications 1 à 8, **caractérisé en ce que** l'axe longitudinal (14) de la forure (11) pour le boulon d'actionnement (9) est orienté sensiblement perpendiculairement à l'axe longitudinal (18) de la forure (10) pour le boulon de blocage (7).

10. Boulon portant selon l'une quelconque des revendications 1 à 9, **caractérisé en ce que** l'extrémité libre du boulon de blocage (7) est munie d'une surface en biseau (19), par l'intermédiaire de laquelle une force poussant le boulon de blocage (7) hors de sa position de blocage peut être introduite dans le boulon de blocage (7) au moment de l'introduction du boulon portant (4) dans des forures (20, 21) des branches (1, 2) de l'organe de réception de charge (3).
